# EUROPÄISCHE PATENTSCHRIFT

(11) **EP 2 508 474 B1**
(45) Veröffentlichungstag und Bekanntmachung des Hinweises auf die Patenterteilung: **25.06.2014**
(21) Anmeldenummer: 12162518.0
(22) Anmeldetag: 30.03.2012
(51) Int. Cl.: C01B 11/02

(54) **Zusammensetzung umfassend einen alpha-Cyclodextrin-Chlordioxidkomplex und einen Inertstoff sowie Verfahren zu ihrer Herstellung**
Composition comprising an alpha-cyclodextrin-chlorine dioxide complex and an inert substance, and also method for production thereof
Composition comprenant un complexe dioxyde de chlore - alpha-cyclodextrine et une matière inerte ainsi que son procédé de fabrication

(30) Priorität: 08.04.2011 DE 102011007057
(43) Veröffentlichungstag der Anmeldung: 10.10.2012
(73) Patentinhaber: Wacker Chemie AG, 81737 München (DE)
(72) Erfinder: Krüger, Benno, 84489 Burghausen (DE); Fleischmann, Gerald, 84489 Burghausen (DE); Neumann, Stefan, 84556 Kastl (DE)
(74) Vertreter: Potten, Holger

(56) Entgegenhaltungen:
- WO-A1-2009/026014
- CN-A- 1 644 488
- CN-A- 1 820 607
- CN-A- 101 669 518
- US-A1- 2006 006 361

## Beschreibung

Die Erfindung betrifft eine sicher handhabbare und transportierbare Zusammensetzung umfassend einen alpha-Cyclodextrin-Chlordioxidkomplex und einen Inertstoff sowie Verfahren zu ihrer Herstellung.

Ein alpha-Cyclodextrin-Chlordioxid-Komplex ist ein selbstzersetzliches Produkt mit einer stark exothermen Zersetzungsenergie (> 1005 J/g) und einer niedrigen Zersetzungstemperatur. Durch Wärmestau bei Lagerung oder Transport kann es bis zum Brand oder exothermer Zersetzung kommen. Der Transport des Komplexes ist nur 15°C unterhalb der "Self accelerating decomposition temperature" (SADT), welche für den alpha-Cyclodextrin-Chlordioxid-Komplex < 35°C beträgt, zulässig. Für eine praktische Verwendung (Transport, Lagerung usw.) ist der Komplex daher nicht geeignet.

Die Herstellung eines alpha-Cyclodextrin-Chlordioxid-Komplexes sowie Bedingungen zur Lagerung bzw. Stabilität sind beispielsweise aus WO/2009026014 bekannt. Auch dort wird beschrieben, dass der Komplex nur bei niedrigen Temperaturen stabil bzw. lagerfähig ist. Ein alpha-Cyclodextrin-Chlordioxid-Komplex ist daher im technischen Maßstab weder sicher noch wirtschaftlich herstellbar und auch seine an sich wünschenswerte Verwendung für viele Einsatzzwecke wie sie ebenfalls in WO/2009026014 beschrieben sind, ist aufgrund seiner stark exothermen Zersetzungsenergie und seiner niedrigen Temperatur, bei der die Zersetzung einsetzt (im folgenden auch als Onsettemperatur bezeichnet), praktisch nicht möglich.

WO 2009/026014 A1 offenbart eine Zusammensetzung umfassend einen alpha-Cyclodextrin-Chlordioxidkomplex sowie einen Inertstoff (z.B. das wasserlösliche Polysaccharid Carboxymethylcellulose), wobei die Zusammensetzung aus dem alpha-Cyclodextrin-Chlordioxidkomplex und dem Inertstoff besteht.

CN 101 669 518 A & DATABASE WPI AN 2010-D58660 offenbart Zusammensetzungen umfassend einen Cyclodextrin-Chlordioxidkomplex sowie Inerstoffe (z.B. Zitronensäure oder Fettsäureglyceriden).

CN 1 820 607 A & DATABASE WPI AN 2007-000534 offenbart eine Zusammensetzung umfassend einen Cyclodextrin-Chlordioxidkomplex sowie einen Inertstoff (Wasser).

CN 1 644 488 A & DATABASE WPI AN 2006-000490 offenbart eine Zusammensetzung umfassend einen Misch (beta- und gamma)-Cyclodextrin-Chlordioxid-komplex, indem eine der beiden Cyclodextrinvarianten als Inertstoff betrachtet werden kann (wasserlösliches Oligo-saccharid).

Keine der Schriften offenbart eine verbesserte Handhabung oder Transportierbarkeit der jeweiligen Komplexe.

Aufgabe der Erfindung war es eine Zusammensetzung enthaltend einen alpha-Cyclodextrin-Chlordioxid-Komplex zur Verfügung zu stellen, die sicher handhabbar und transportierbar ist.

Diese Aufgabe wird gelöst durch eine Zusammensetzung umfassend 5 bis 80 Gew.%, bezogen auf das Gesamtgewicht der Zusammensetzung, einen alpha-Cyclodextrin-Chlordioxidkomplex sowie 20 bis 95 Gew.%, bezogen auf das Gesamtgewicht der Zusammensetzung einen Inertstoff ausgewählt aus der Gruppe Kieselsäure, Kieselgel, Erdalkalisalz der Kieselsäure, Erdalkalisalz der Schwefelsäure, Erdalkalisalz der Phosphorsäure, Erdalkalisalz der Fluorwasserstoffsäure, Erdalkalisalz der Kohlensäure, Oxid des Aluminiums, Oxid des Magnesiums, Oxid des Siliziums, Oligo- oder Polysaccharide mit einer Wasserlöslichkeit < 50 g/l (bei 25°C), Vinylalkoholcopolymere und gemahlenes natürliches Mineral ausgewählt aus der Gruppe Erdalkalisulfate, Dolomit, Kalkstein, Talkum, Magnesit, Diatomineenerde und deren Mischungen.

Unter einem Inertstoff ist im Sinne der vorliegenden Anmeldung ein Stoff zu verstehen, der weder mit Chlordioxid noch mit Cylodextrin reagiert, noch eine exotherme Zersetzung des alpha-Cyclodextrin-Chlordioxidkomplexes fördert. Der Zusatz des Inertstoffs zum alpha-Cyclodextrin-Chlordioxidkomplex bewirkt eine Verminderung der Zersetzungswärme, eine Erhöhung der Temperatur des Zersetzungsbeginns, eine Verminderung der Wärme der Selbstzersetzung durch endotherme Reaktion und eine Verminderung der Brandgefahr des Komplexes in der Zusammensetzung.

Das gemahlene Material ist vorzugsweise so fein gemahlen, das es in Wasser suspendierbar und förderbar ist.

Besonders bevorzugt handelt es sich bei dem Inertstoff um Kieselgel, Kieselsäure, Diatomineenerde, Oligo- oder Polysaccharid mit einer Wasserlöslichkeit < 50 g/l (bei 25°C) oder Vinylalkoholcopolymer.

Vorzugsweise besteht die erfindungsgemäße Zusammensetzung aus dem alpha-Cyclodextrin-Chlordioxidkomplex und dem Inertstoff.

Die Herstellung des erfindungsgemäßen alpha-Cyclodextrin-Chlordioxid-Komplex Inertstoffgemisches kann dadurch erfolgen, dass ein alpha-Cyclodextrin-Chlordioxidkomplex mit mindestens einem Inertstoff ausgewählt aus der Gruppe Kieselsäure, Kieselgel, Erdalkalisalz der Kieselsäure, Erdalkalisalz der Schwefelsäure, Erdalkalisalz der Phosphorsäure, Erdalkalisalz der Fluorwasserstoffsäure, Erdalkalisalz der Kohlensäure, Oxid des Aluminiums, Oxid des Magnesiums, Oxid des Siliziums, Oligo- oder Polysaccharide mit einer Wasserlöslichkeit < 50 g/l (bei 25°C), Vinylalkoholcopolymere und gemahlenes natürliches Mineral ausgewählt aus der Gruppe Erdalkalisulfate, Dolomit, Kalkstein, Talkum, Magnesit, Diatomineenerde und deren Mischungen gemischt wird.

Die Herstellung des alpha-Cyclodextrin-Chlordioxid-Komplex Inertstoffgemisches erfolgt vorzugsweise dadurch, dass eine wässrige alpha-Cyclodextrin-Lösung und ein Inertstoff ausgewählt aus der Gruppe Kieselsäure, Kieselgel, Erdalkalisalz der Kieselsäure, Erdalkalisalz der Schwefelsäure, Erdalkalisalz der Phosphorsäure, Erdalkalisalz der Fluorwasserstoffsäure, Erdalkalisalz der Kohlensäure, Oxid des Aluminiums, Oxid des Magnesiums, Oxid des Siliziums, Oligo- oder Polysaccharide mit einer Wasserlöslichkeit < 50 g/l (bei 25°C), Vinylalkoholcopolymere und gemahlenes natürliches Mineral ausgewählt aus der Gruppe Erdalkalisulfate, Dolomit, Kalkstein, Talkum, Magnesit, Diatomineenerde und deren Mischungen gemischt werden und in diese Mischung Chlordioxid eingeleitet wird, wobei die Zusammensetzung umfassend einen alpha-Cyclodextrin-Chlordioxidkomplex und den Inertstoff ausfällt und diese Zusammensetzung abgetrennt wird. Bei diesem Verfahren erfolgt die Herstellung des alpha-Cyclodextrin-Chlordioxid-Komplexes in Gegenwart einer Suspension des genannten Inertstoffes, so dass der alpha-Cyclodextrin-Chlordioxid-Komplex homogenverteilt in der Inertstoff-Suspension gebildet und bereits als homogenes Gemisch mit dem Inertstoff isoliert wird. Bei dem so erhaltenen Inertstoff alpha-Cyclodextrin-Chlordioxid-Komplex wird die Zersetzungswärme der erfindungsgemäßen Zusammensetzung im Vergleich zum reinen alpha-Cyclodextrin-Chlordioxid-Komplex überaschenderweise deutlich gesenkt. Da gleichzeitig die Onset-Temperatur ansteigt sind Herstellung, Handhabung, Lagerung und Transport der erfindungsgemäßen Zusammensetzung sicher möglich. Insbesondere die gefahrlose Herstellung und Gewinnung der erfindungsgemäßen Zusammensetzung ist durch dieses Verfahren möglich.

Die Herstellung der erfindungsgemäßen Zusammensetzung erfolgt vorzugsweise bei einer Temperatur von 0 bis 30°C bevorzugt 0°C bis 20°C über einen Zeitraum von 1 bis 10 min besonders bevorzugt 1 bis 5 min und/oder bei einem pH von 3,0 bis 9,0.

Die Bildung der Zusammensetzung erfolgt in der Regel unter Normaldruck. Bevorzugt findet die Komplexierung unter Schutzgasatmosphäre (Stickstoff oder Argon) sowie unter Ausschluss von Tageslicht statt.

Eine so gebildete Suspension kann direkt verwendet werden, sie kann aber auch durch Filtration, Zentrifugation, Trocknung, Mahlen, Sieben, Sichten, Granulieren, Tablettieren isoliert und aufbereitet werden bzw. anwendungsspezifisch weiter formuliert werden.

Die erfindungsgemäße Zusammensetzung läßt sich für alle bereits in WO/2009026014 dort insbesondere auf S. 11 genannten Zwecke verwenden.

Die folgenden Beispiele dienen der weiteren Erläuterung der Erfindung.

### Vergleichsbeispiel 1

### Herstellung eines ClO₂-alpha-Cyclodextrin-Komplexes und Bestimmung seiner thermischen Stabilität

Chlordioxid und der ClO₂-Komplex mit alpha-Cyclodextrin (im Folgenden abgekürzt als: ClO₂-Komplex) wurden analog WO/2009026014 hergestellt:
Ein 2-4 molarer Überschuss an Chlordioxid wurde in eine 8,3%ige wässrige alpha-Cyclodextrin-Lösung bei Raumtemperatur, worunter im Rahmen der vorliegenden Anmeldung 23° C zu verstehen sind, eingeleitet. Der alpha-Cyclodextrin-Chlordioxid-Komplex war praktisch wasserunlöslich und fiel daher aus. Der Komplex wurde durch Absaugen, Waschen mit Aceton und Trocknung im Vakuum bei Temperaturen von maximal 30°C typischerweise in Ausbeuten von 50-60% (bezogen auf die eingesetzte Cyclodextrin-Menge) isolieren.

Kleinmengen (< 1 kg) dieses Komplexes ließen sich bei tiefer Temperatur (Gefrierschrank; -18°C) stabil bis zu 3 Monaten lagern. Bei erhöhten Temperaturen (30-50°C) war bereits nach wenigen Tagen eine vollständige Zersetzung unter Verkohlungserscheinungen zu beobachten.

Die thermische Stabilität der zu untersuchenden Proben wurde mit Hilfe der Dynamischen Differenz-Kalorimetrie (DSC) untersucht. Als Probenbehälter diente dabei ein druckfester Stahltiegel mit Glaseinsatz (DSC-Tiegel), der sicherstellt, dass keine Verdampfungsverluste möglich sind. Alle Messungen erfolgten im DSC-Tiegel unter N₂-Atmosphäre.

**Tabelle 1**

| Ergebnisse der DSC-Untersuchungen | | | | | |
|---|---|---|---|---|---|
| **Nr** | **Zusammensetzung/Massenverhältnisse** | | **Bereich** | **-**Δ**Hᵣ** | Δ**T_{ad}** |
| | **Gew.%** | | **°C** | **kJ kg⁻¹ K⁻¹** | **°C** |
| **1** | ClO₂-Komplex = 100 | | 61-243 | 1005 | 503 |
| Abkürzungen : | | | | | |
| Bereich | | In diesem Temperaturbereich wurde eine Zersetzungsreaktion beobachtet. Die linke Grenze entspricht der Onsettemperatur der Zersetzung. | | | |
| -ΔHr | | Zersetzungsenthalpie in kJ pro kg Gemisch. | | | |
| ΔTad | | Adiabatische Temperaturerhöhung | | | |

### Beispiele 1-5

### Herstellung einer alpha-Cyclodextrin-ClO₂-Inertstoff-Zubereitungen und Bestimmung ihrer thermischen Stabilität

Zu 718 g einer 8% igen wässrigen alpha-Cyclodextrin-Lösung wurden unterschiedliche Mengen (siehe Tab. 2) wasserunlöslicher anorganischer Inertstoffe (siehe Tab. 2) gegeben. In die erhaltene Suspension wurde unter Kühlung Chlordioxid im vierfachen Überschuß eingeleitet. Nach 90 Minuten war die Dosierung beendet. Der in Gegenwart des Inertstoffes entstandene alpha-Cyclodextrin-Chlordioxid-Komplex wurde zusammen mit dem Inertstoff als optisch homogene Mischung abgesaugt, mit Aceton gewaschen und im Vakuum bei Raumtemp. getrocknet.

Die thermische Stabilität der zu untersuchenden Proben wurde mit Hilfe der Dynamischen Differenz-Kalorimetrie (DSC) analog Vergleichsbeispiel 1 untersucht.

**Tabelle 2:ClO₂-Komplexbildung in Gegenwart von inerten Füllstoffen**

| **Nr** | **Zusammensetzung/Massenverhältnisse** | **Bereich** | **-**Δ**Hᵣ** | Δ**T_{ad}** |
|---|---|---|---|---|
| | **Gew.%** | **°C** | **kJ kg⁻¹ K⁻¹** | **°C** |
| **1** | Kieselgel:ClO₂-Komplex=61,4 : 38,6 | 83-145 | 146 | 82 |
| | | 180-252 | 162 | 90 |
| | | 259-373 | 209 | 117 |
| **2** | Kieselgel:ClO₂-Komplex = 67,6 : 32,4 | 83-147 | 112 | 63 |
| | | 158-247 | 167 | 93 |
| **3** | Talkum:ClO₂-Komplex = 47,1 : 52,9 | 83-150 | 244 | 136 |
| | | 158-253 | 288 | 160 |
| | | 268-349 | 47 | 27 |
| **4** | Talkum:ClO₂-Komplex = 37,9 : 62,1 | 86-164 | 319 | 178 |
| | | 166-236 | 244 | 136 |
| **5** | BaSO₄:ClO₂-Komplex = 57,7 : 42,3 | 67-149 | 192 | 96 |
| | | 164-255 | 129 | 65 |
| | | 300-360 | 38 | 19 |

| Abkürzungen: | | | | |
|---|---|---|---|---|
| **Bereich** | | | In diesem Temperaturbereich wurde eine Zersetzungsreaktion beobachtet. Die linke Grenze entspricht der Onsettemperatur der Zersetzung. | |
| -Δ**Hᵣ** | | | Zersetzungsenthalpie in kJ pro kg Gemisch. | |
| Δ**T_{ad}** | | | Adiabatische Temperaturerhöhung | |

## Patentansprüche

1. Zusammensetzung umfassend 5 bis 80 Gew.% bezogen auf das Gesamtgewicht der Zusammensetzung einen alpha-Cyclodextrin-Chlordioxidkomplex sowie 20 bis 95 Gew. % bezogen auf das Gesamtgewicht der Zusammensetzung einen Inertstoff ausgewählt aus der Gruppe Kieselsäure, Kieselgel, Erdalkalisalz der Kieselsäure, Erdalkalisalz der Schwefelsäure, Erdalkalisalz der Phosphorsäure, Erdalkalisalz der Fluorwasserstoffsäure, Erdalkalisalz der Kohlensäure, Oxid des Aluminiums, Oxid des Magnesiums, Oxid des Siliziums, Oligo- oder Polysaccharid mit einer Wasserlöslichkeit < 50 g/l (bei 25°C), Vinylalkoholcopolymer, und gemahlenes natürliches Mineral ausgewählt aus der Gruppe Erdalkalisulfate, Dolomit, Kalkstein, Talkum, Magnesit, Diatomineenerde und deren Mischungen.

2. Zusammensetzung gemäß Anspruch 1, **dadurch gekennzeichnet, dass** sie aus dem alpha-Cyclodextrin-Chlordioxidkomplex und dem Inertstoff besteht.

3. Verfahren zur Herstellung einer Zusammensetzung gemäß Anspruch 1 oder 2, **dadurch gekennzeichnet, dass** ein alpha-Cyclodextrin-Chlordioxidkomplex mit mindestens einem Inertstoff ausgewählt aus der Gruppe Kieselsäure, Kieselgel, Erdalkalisalz der Kieselsäure, Erdalkalisalz der Schwefelsäure, Erdalkalisalz der Phosphorsäure, Erdalkalisalz der Fluorwasserstoffsäure, Erdalkalisalz der Kohlensäure, Oxid des Aluminiums, Oxid des Magnesiums, Oxid des Siliziums, Oligo- oder Polysaccharid mit einer Wasserlöslichkeit < 50 g/l (bei 25°C), Vinylalkoholcopolymer, und gemahlenes natürliches Mineral ausgewählt ist aus der Gruppe Erdalkalisulfate, Dolomit, Kalkstein, Talkum, Magnesit, Diatomineenerde und deren Mischungen gemischt wird.

4. Verfahren zur Herstellung einer Zusammensetzung gemäß Anspruch 1 oder 2, **dadurch gekennzeichnet, dass** eine wässrige alpha-Cyclodextrin-Lösung und ein Inertstoff ausgewählt aus der Gruppe Kieselsäure, Kieselgel, Erdalkalisalz der Kieselsäure, Erdalkalisalz der Schwefelsäure, Erdalkalisalz der Phosphorsäure, Erdalkalisalz der Fluorwasserstoffsäure, Erdalkalisalz der Kohlensäure, Oxid des Aluminiums, Oxid des Magnesiums, Oxid des Siliziums, Oligo- oder Polysaccharid mit einer Wasserlöslichkeit < 50 g/l (bei 25°C), Vinylalkoholcopolymer, und gemahlenes natürliches Mineral ausgewählt ist aus der Gruppe Erdalkalisulfate, Dolomit, Kalkstein, Talkum, Magnesit, Diatomineenerde und deren Mischungen gemischt werden und in diese Mischung Chlordioxid eingeleitet wird, wobei die Zusammensetzung umfassend einen alpha-Cyclodextrin-Chlordioxidkomplex und den Inertstoff ausfällt und diese Zusammensetzung abgetrennt wird.

## Claims

1. Composition comprising 5 to 80% by weight, based on the total weight of the composition, of an alpha-cyclodextrin-chlorine dioxide complex and 20 to 95% by weight, based on the total weight of the composition, of an inert substance selected from the group silicic acid, silica gel, alkaline earth metal salt of silicic acid, alkaline earth metal salt of sulfuric acid, alkaline earth metal salt of phosphoric acid, alkaline earth metal salt of hydrofluoric acid, alkaline earth metal salt of carbonic acid, oxide of aluminum, oxide of magnesium, oxide of silicon, oligo- or polysaccharide having a water solubility < 50 g/l (at 25°C), vinyl alcohol copolymer, and milled natural mineral selected from the group alkaline earth metal sulfates, dolomite, limestone, talc, magnesite, diatomaceous earth and mixtures thereof.

2. Composition according to Claim 1, **characterized in that** it comprises the alpha-cyclodextrin-chlorine dioxide complex and the inert substance.

3. Method for producing a composition according to Claim 1 or 2, **characterized in that** an alpha-cyclodextrin-chlorine dioxide complex is mixed with at least one inert substance selected from the group silicic acid, silica gel, alkaline earth metal salt of silicic acid, alkaline earth metal salt of sulfuric acid, alkaline earth metal salt of phosphoric acid, alkaline earth metal salt of hydrofluoric acid, alkaline earth metal salt of carbonic acid, oxide of aluminum, oxide of magnesium, oxide of silicon, oligo- or polysaccharide having a water solubility < 50 g/l (at 25°C), vinyl alcohol copolymer, and milled natural mineral selected from the group alkaline earth metal sulfates, dolomite, limestone, talc, magnesite, diatomaceous earth and mixtures thereof.

4. Method for producing a composition according to Claim 1 or 2, **characterized in that** an aqueous alpha-cyclodextrin solution and an inert substance selected from the group silicic acid, silica gel, alkaline earth metal salt of silicic acid, alkaline earth metal salt of sulfuric acid, alkaline earth metal salt of phosphoric acid, alkaline earth metal salt of hydrofluoric acid, alkaline earth metal salt of carbonic acid, oxide of aluminum, oxide of magnesium, oxide of silicon, oligo- or polysaccharide having a water solubility < 50 g/l (at 25°C), vinyl alcohol copolymer, and milled natural mineral selected from the group alkaline earth metal sulfates, dolomite, limestone, talc, magnesite, diatomaceous earth and mixtures thereof are mixed and chlorine dioxide is introduced into this mixture, wherein the composition comprising an alpha-cyclodextrin-chlorine dioxide complex and the inert substance precipitates out, and this composition is separated off.

## Revendications

1. Composition comprenant 5 à 80% en poids, par rapport au poids total de la composition, d'un complexe d'alpha-cyclodextrine-dioxyde de chlore ainsi que 20 à 95% en poids, par rapport au poids total de la composition, d'une substance inerte choisie dans le groupe formé par la silice, le gel silicique, un sel alcalino-terreux de la silice, un sel alcalino-terreux de l'acide sulfurique, un sel alcalino-terreux de l'acide phosphorique, un sel alcalino-terreux de l'acide fluorhydrique, un sel alcalino-terreux de l'acide carbonique, l'oxyde d'aluminium, l'oxyde de magnésium, l'oxyde de silicium, un oligosaccharide ou un polysaccharide présentant une solubilité dans l'eau < 50 g/l (à 25°C), un copolymère d'alcool vinylique et un minéral naturel broyé, choisi dans le groupe formé par les sulfates de métal alcalino-terreux, la dolomite, le calcaire, le talc, la magnésite, les terres de diatomées et leurs mélanges.

2. Composition selon la revendication 1, **caractérisée en ce qu'**elle est constituée par le complexe d'alpha-cyclodextrine-dioxyde de chlore et de la substance inerte.

3. Procédé pour la préparation d'une composition selon la revendication 1 ou 2, **caractérisé en ce qu'**on mélange un complexe d'alpha-cyclodextrine-dioxyde de chlore avec au moins une substance inerte choisie dans le groupe formé par la silice, le gel silicique, un sel alcalino-terreux de la silice, un sel alcalino-terreux de l'acide sulfurique, un sel alcalino-terreux de l'acide phosphorique, un sel alcalino-terreux de l'acide fluorhydrique, un sel alcalino-terreux de l'acide carbonique, l'oxyde d'aluminium, l'oxyde de magnésium, l'oxyde de silicium, un oligosaccharide ou un polysaccharide présentant une solubilité dans l'eau < 50 g/l (à 25°C), un copolymère d'alcool vinylique et un minéral naturel broyé, choisi dans le groupe formé par les sulfates de métal alcalino-terreux, la dolomite, le calcaire, le talc, la magnésite, les terres de diatomées et leurs mélanges.

4. Procédé pour la préparation d'une composition selon la revendication 1 ou 2, **caractérisé en ce qu'**on mélange une solution aqueuse d'alpha-cyclodextrine et une substance inerte choisie dans le groupe formé par la silice, le gel silicique, un sel alcalino-terreux de la silice, un sel alcalino-terreux de l'acide sulfurique, un sel alcalino-terreux de l'acide phosphorique, un sel alcalino-terreux de l'acide fluorhydrique, un sel alcalino-terreux de l'acide carbonique, l'oxyde d'aluminium, l'oxyde de magnésium, l'oxyde de silicium, un oligosaccharide ou un polysaccharide présentant une solubilité dans l'eau < 50 g/l (à 25°C), un copolymère d'alcool vinylique et un minéral naturel broyé, choisi dans le groupe formé par les sulfates de métal alcalino-terreux, la dolomite, le calcaire, le talc, la magnésite, les terres de diatomées et leurs mélanges et on introduit du dioxyde de chlore dans ce mélange, la composition comprenant un complexe d'alpha-cyclodextrine-dioxyde de chlore et la substance inerte précipitant et cette composition étant séparée.
